# EUROPEAN PATENT APPLICATION

(11) **EP 4 814 440 A1**
(43) Date of publication of application: **30.09.2026**
(21) Application number: 26166933.7
(22) Date of filing: 23.03.2026
(51) Int. Cl.: G01C 15/00, G06T 19/00

(54) **SYSTEM AND METHOD FOR ENABLING MIXED REALITY ON MOBILE DEVICES IN A CONSTRUCTION SITE**

(30) Priority: 24.03.2025 US 202519088567
(71) Applicant: Lightyx Systems Ltd., 6936228 Tel Aviv (IL)
(72) Inventor: YEHUDAY, Uri, 5844768 Holon (IL); ELRAN, Tomer Shaul, 4934635 Petah-Tikva (IL)
(74) Representative: Pearl Cohen UK

(57) **Abstract**

A system for registering position and orientation (P&O) of mobile devices relative to a construction site may include: a light projector; at least one sensor configured to record at least one set of XYZ coordinates of at least one specific surface, and a set of XYZ coordinates of the light projector within the construction site; and a computer processor, wherein the light projector is configured to project the XYZ coordinates of the at least one set of position markers onto the at least one specific surface; and wherein the projection of the XYZ coordinates of the at least one set of position markers is detectable by at least one sensor located at a mobile device, allowing registration of XYZ coordinates of a virtual reality interface of the mobile device relative to the projection of the position markers onto the at least one specific surface.

## Description

### FIELD OF THE INVENTION

The present invention relates generally to the field of augmented reality projection, and more specifically, to a system and method for registering and adapting the projection of an augmented reality projector and registering mobile devices.

### BACKGROUND OF THE INVENTION

Most standard construction processes involve two principal stages, namely a design stage and a build stage. In the design stage, an architect typically plans the layout and composition of a structure and possibly proposes a construction timeframe or schedule. In the build stage, a contractor, possibly assisted by a team of builders, implements the architectural plan and thereby builds the structure and/or associated facilities according to the specification and schedule provided.

In order to ensure that the resultant structure matches the architectural plans as closely as possible, building stages are often very slow and may entail a plurality of surveyors regularly assessing and measuring aspects of the construction to obviate the emergence or continuation of plan divergence. This is generally important as, should significant unintended plan divergence occur, there may be limited opportunity to rectify the construction (e.g., the building structure, pipework, and the like) later on during the build cycle. In particular, certain levels of plan divergence could impede structural integrity and moreover necessitate substantial modification, overhaul or even rebuild. In some circumstances, particularly where there are strict timeframes or budgets at play, plan divergence may be prohibitively expensive or timely to rectify and moreover could result in the construction project being completed late, over-budget and/or remain unfinished.

In order to improve build accuracy and efficiency, a number of known electronic devices are often employed during build projects, such as laser distance meters and three-dimensional (3D) reconstruction tools. These electronic devices are, however, cumbersome, insufficiently accurate and sometimes unwieldy to use, and moreover often address localized, rather than macroscopic, aspects of the construction.

More recent developments include the so-called "Adaptive Projected Reality" (APR) approach, as originally disclosed by LightYX Systems Ltd in International Publication Number WO 2018/229769 A1. Devices incorporating APR techniques are growing in prevalence and popularity and are typically characterized by features enabling the real-time projection of visual instructions and/or images onto one or more surfaces in a scene. APR devices may moreover be capable of adaptively changing and aligning their projected content relative to varying environments in accordance with plans or build schematics.

APR devices typically utilize laser systems, such as laser projectors or survey tools, to mark accurate points, shapes, or even entire plans within a construction site. Such systems usually require knowledge of reference features within the construction site in order to conduct a registration process and thereby position themselves within the build space such that they may project plans accurately in alignment with the environment.

Once an APR device has been registered and stationed knowing its position (or relative position), and knowing the surfaces and surrounding elements as described by the construction plan, the device can accurately project a portion of the construction plan, usually feature, elements or a pattern thereof (such as borders of a window, piping location on ceiling and the like) onto at least one specific surface that has been built according to the construction plan.

The projection of the pattern or the feature allows the builders to easily orientate within the construction site, understand his intended work and carry out the building task associated with the projected feature, such as cutting out a window in a wall, placing a wall in the right location on the floor, placing a pipe on the ceiling. This process is usually called setting out.

One way to carry out the registration process is to use two or more (preferably three) reference points or reference features whose exact position is already known. The challenge with such processes, however, is that the field of view (FOV) of the laser projector is typically limited comparative to the dimensions of the overall construction site and so several projection sessions may be required in order to register the entire scene. This is especially true in circumstances where the reference points of the construction site cannot all be contained within a single FOV of the projector.

Further challenge may arise in circumstances where the light projector is relocated within the construction site, thereby necessitating the user to conduct a fresh, often time consuming, re-registration process.

The registration process additionally requires the laser system to determine its precise position within and relative to the construction site. The laser system is therefore typically configured to direct laser beams directly at each of the reference points or reference features within the construction site and to subsequently record the point distance and/or the angle of these reference points/features relative to the laser projector. A geometric computation involving a triangulation or trilateration process may then be conducted to calculate the exact laser system location within the build space.

In order to acquire each of the reference points/features, current methods usually involve an operator manually controlling the system axes in order to point the laser system towards the reference points/features. This is generally an undesirably slow process and owing to human input, is prone to operator induced error. In an alternative approach, the operator may hold a reflector prism and physically place the prism on every reference point/feature while the laser system tracks the reflector. This approach, although less intensive, is still prohibitively slow and prone to operator induced error.

Another method may involve placing reflective target stickers atop each of the reference points/features and instructing the laser system to scan the entire range of its motion until all reference points are located. Whilst this method may be completed entirely autonomously (i.e., without human input or action), it is often undesirably slow to conduct and thus inefficient.

The use of mobile devices such as head mounted displays on construction sites may increase the productivity of construction workers since construction workers can receive building instructions in form of an augmented reality (AR) or mixed reality (MR) view. For an accurate display of artificially created objects within a real-world view, a mobile device may need to be accurately registered with respect to the construction site, e.g., real-world objections such as surfaces within a scene.

Registration of individual mobile devices at a construction site can be achieved by detecting physical key points within a construction site. However, such a detection process is often considered to be inaccurate and time consuming.

Accordingly, there is a need to simplify the registration processes of mobile devices but also to improve the accuracy of registration processes of mobile devices within construction sites.

### SUMMARY OF THE PRESENT INVENTION

Accurate registration of a head mounted display (HMD) or mobile device (e.g., phone, tablet) used for augmented reality (AR) and mixed reality (MR) poses an ongoing challenge. It is crucial that the display location & orientation (P&O) to the scene is calculated so that the actual scene and the synthetic data are registered. This process is usually done by detecting physical key points in the scene that have known coordinates, but the process is inaccurate and time consuming.

In order to overcome the aforementioned challenges, some embodiments of the present invention provide a system for accurate registration of a head mounted device or mobile device (e.g., phone, tablet) for augmented reality and mixed reality in a construction site.

The system according to some embodiments takes advantage of a positioning-projection device held on a stand via a rotating mechanism. The positioning-projection device is capable of both positioning itself in the scene using various methods including known key points in the scene and other methods. Once registered, a full 6-degrees of freedom (6DOF) are known for the positioning-projection device.

According to some embodiments, the positioning-projection device can then project onto the scene, synthetic key features (points, lines, shapes, etc.) whose accurate position is known to the positioning-projection device.

Any human user equipped with a head mounted display or mobile device used for either AR or MR can then detect the synthetic key features and receive by means of communication from positioning-projection device, the location data for the synthetic key points thereby registering on the scene accurately and quickly.

Once registered, The HMD can generate synthetic data such as walls and construction elements registered on the scene. In addition to the walls and construction elements already projected by positioning-projection device.

According to another embodiment of the present invention, the positioning-projection device may be configured to transmit its captured field of view (FOV) of the scene to the head mounted display (HMD) or mobile device used for AR or MR which in turn, presents an AR or MR view from the point of view of the positioning-projection device on the display of HMD or mobile device.

Some embodiments of the invention provide a system, and related method for accurate registration of a mobile device, e.g., relative to the field of view of a mobile device, e.g., a head mounted display (HMD) for enabling Augmented Reality and Mixed Reality thereon.

Further embodiments propose the generation of an augmented reality and/or mixed reality in a construction site by enhancing the field of view, e.g., real-world view, of a mobile device with projections generated by a light projector, wherein the field of view of the mobile device and the location of the projection by the light projector within a construction site are registered.

Some embodiments of the present invention may provide a system for registering position and orientation (P&O) of mobile devices relative to a construction site, the system including: a light projector, at least one sensor configured to record at least one set of XYZ coordinates of at least one specific surface, and a set of XYZ coordinates of the light projector within the construction site; and a computer processor configured to: derive, from a construction plan, an intended projection portion which includes visual content and dimensional data intended to be projected on the at least one specific surface which also appears in the construction plan; calculate at least one set of position markers from the intended projection, wherein each position marker includes an XYZ position within the at least one specific surface, wherein the XYZ position is calculated relative to a position of the light projector; and provide the at least one set of position markers to the light projector, wherein the light projector is configured to project the XYZ coordinates of the at least one set of position markers onto the at least one specific surface; and wherein the projection of the XYZ coordinates of the at least one set of position markers is detectable by at least one sensor located at a mobile device, allowing registration of XYZ coordinates of a virtual reality interface of the mobile device relative to the projection of the position markers onto the at least one specific surface.

Some embodiments of the present invention may provide a mobile device for a construction site, the mobile device including: at least one sensor configured to detect a projection of at least one set of position markers within a real-world scene at a construction site; a display unit configured to enhance the real-world scene with a virtual reality interface; and a computer processor configured to: register at least one set of XYZ coordinates of the virtual reality interface of the mobile device relative to the detected projection of the at least one set of position markers; and provide the registered virtual reality interface to the display unit of the mobile device.

Some embodiments of the present invention may provide a method of registering position and orientation (P&O) of mobile devices relative to a construction site, the method including: positioning a light projector within the construction site; recording, by at least one sensor, at least one set of XYZ coordinates of at least one specific surface, and a set of XYZ coordinates of a light projector within the construction site; deriving, from a construction plan, an intended projection portion which includes visual content and dimensional data intended to be projected on the at least one specific surface which also appears in the construction plan; calculating at least one set of position markers from the intended projection, wherein each position marker includes an XYZ position within the at least one specific surface, wherein the XYZ position is calculated relative to a position of the light projector; providing the at least one set of position markers to the light projector; projecting, by the light projector, the XYZ coordinates of the at least one set of position markers onto the at least one specific surface; detecting, by at least one sensor of a mobile device, the projection of the at least one set of position markers; and registering at least one set of XYZ coordinates of the virtual reality interface of the mobile device relative to the detected projection of the at least one set of position markers.

These and other advantages of the present invention are set forth in detail in the following description.

### BRIEF DESCRIPTION OF THE DRAWINGS

For a better understanding of the invention and in order to show how it may be implemented, references are made, purely by way of example, to the accompanying drawings in which like numerals designate corresponding elements or sections. In the accompanying drawings:
**Figures 1A, 1B****,** **1C, 1D** **and** **1E** are high-level diagrams illustrating aspects of a laser projector in accordance with some embodiments of the present invention;
**Figures 2A** **and** **2B** are high-level block diagrams illustrating a non-limiting system arrangement in accordance with embodiments of the present invention;
**Figure** 3 is a high-level diagram illustrating a laser projector registration process in accordance with some embodiments of the present invention;
**Figures 4A, 4B** and **4C** are high-level diagrams illustrating one use case of a laser projector in accordance with some embodiments of the present invention;
**Figure 5A** and **5B** are high-level diagrams illustrating another use case of a laser projector in accordance with some embodiments of the present invention;
**Figure 6** is a high-level flow diagram illustrating a method in accordance with embodiments of the present invention;
**Figure 7** is a high-level diagram illustrating an exemplary APT device in accordance with embodiments of the present invention;
**Figure 8A****,** **Figure 8B****,** **Figure 8C****,** and **Figure 8D** are high-level diagrams depicting a projector within a construction site in accordance with some embodiments of the present invention;
**Figure 9, Figure 10A****,** **Figure 10B****,** **Figure 10C****,** **Figure 10D****,** **Figure 11****,** and **Figure 12** are high-level diagrams illustrating an exemplary laser projector system in accordance with some embodiments of the present invention;
**Figure 13** is a high-level block diagram illustrating a system in accordance with embodiments of the present invention;
**Figure 14** is a diagram illustrating an aspect in accordance with some embodiments of the present invention;
**Figure 15** is a diagram illustrating another aspect in accordance with some embodiments of the present invention;
**Figure 16** is a diagram illustrating yet another aspect in accordance with some embodiments of the present invention;
**Figure 17** is a high-level flowchart diagram illustrating a method in accordance with embodiments of the present invention;
**Figure 18** is a high-level block diagram illustrating a system in accordance with embodiments of the present invention;
**Figure 19** is a high-level flowchart diagram illustrating a method in accordance with embodiments of the present invention;
**Figure 20** is a high-level flowchart diagram illustrating a method in accordance with embodiments of the present invention;
**Figure 21** is a high-level diagram illustrating a laser projector registration process in accordance with some embodiments of the present invention;
**Figure 22** is a high-level flowchart diagram illustrating a method in accordance with embodiments of the present invention; and
**Figure 23** is a high-level flowchart diagram illustrating a method in accordance with embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

With specific reference now to the drawings in detail, it is stressed that the particulars shown are for the purpose of example and solely for discussing the preferred embodiments of the present invention and are presented in the cause of providing what is believed to be the most useful and readily understood description of the principles and conceptual aspects of the invention. In this regard, no attempt is made to show structural details of the invention in more detail than is necessary for a fundamental understanding of the invention. The description taken with the drawings makes it apparent to those skilled in the art how the several forms of the invention may be embodied in practice.

Before the embodiments of the invention are explained in detail, it is to be understood that the invention is not limited in its application to the details of construction and the arrangement of the components set forth in the following descriptions or illustrated in the drawings. The invention is applicable to other embodiments and may be practiced or carried out in various ways. Also, it is to be understood that the phraseology and terminology employed herein is for the purpose of description and should not be regarded as limiting.

Prior to the detailed description of the invention being set forth, the following term definitions are provided.

The term 'adaptive' as used herein refers generally to capability or susceptibility to undergo accordant change to improve fit or suitability. More specifically, in the present context 'adaptive' refers to the capacity of a system or tool to vary its output, for example its projected output, in accordance with a dynamic scene, environmental alterations or a movement of the device itself.

The terms 'augmented reality' and 'projected reality' refer generally to a direct or indirect view of a physical real-world environment whose elements have been augmented by overlaid computer-generated perceptual information. This perceptual information may, in particular, be presented using visual modes; however other modalities such as auditory, haptic, somatosensory and olfactory modes may also be employed. Overlaid sensory information may be constructive or destructive and thereby act to additively compliment features present in the environment or otherwise act to obfuscate and mask features present in the environment.

The terms 'point', 'reference point' or 'reference feature' as used herein refer generally to a visual indicator that serves, as part of two or more (usually three) reference points, for a registration process of a light projector onto a scene. Specifically, a reference point in a construction site is a pre-defined and pre-measured point whose exact absolute position is known, for example relative to an Earth centered frame of reference, usually to within a sub-centimeter tolerance. The point may, for example, be set or measured by a surveyor or similarly skilled worker, or alternatively it may be an easily defined point or feature such as a wall corner which appears both in site and on plan, whose position is known within a few centimeter's (preferably sub-centimeter) tolerance.

The term 'two-axis electro-optic deflection unit' as used herein refers generally to an arrangement operable provide a pan-tilt mechanism involving, for example, deflecting a laser beam in an X and Y direction to produce a two-dimensional (2D) area in which the laser beam may be freely directed. The trajectory of the laser beam may typically be adjusted at a high speed, albeit may generally restricted to relatively narrow FOV. The deflection may be achieved using, for example, a two-mirror arrangement where each mirror may be independently controlled and moved using a 'galvanometer scanner', 'MEMS scanner' or 'light scanner'.

The terms 'galvanometer scanner', 'MEMS scanner' or 'light scanner' as used herein refer generally to a device operable to control and move a set of mirrors in order to steer a laser beam. The steering of the beam may be two-dimensional, and the mirrors may be used to generate freely addressable motion, as in servo-controlled galvanometer scanners, sometimes referred to as vector scanning. To control the scanning motion, each scanner may require a rotary encoder, or other analogous form of angle and/or speed feedback, and control electronics that provide, for a desired angle or phase, the requisite electric current to the motor or galvanometer. A software system may be configured to control the scanning motion and if 3D scanning is implemented, also the collection of the measured data. In order to position a laser beam in two dimensions, it is possible either to rotate one mirror along two axes - used mainly for slow scanning systems - or to reflect the laser beam onto two closely spaced mirrors that are mounted on orthogonal axes. Each of the two flat or polygonal mirrors may then driven by a galvanometer or by an electric motor. In some embodiments the 2 axis deflection unit might comprise an electro optic spatial light modulator, such as: transmissive liquid crystal, reflective liquid crystal on silicon (LCOS), Digital Light Processing (DLP) projectors.

The term 'collimated beam of light' as used herein refers generally to a beam of light that comprises near parallel rays and therefore will spread minimally as it propagates. A hypothetical perfectly collimated light beam, with no divergence, would in theory not disperse with distance. However, such perfectly collimated light beams cannot be created in practice owing to diffraction effects. Laser beams are an example of a directional, collimated light beam. The divergence observed in high-quality laser beams is typically less than 1 milliradian.

The terms 'human-machine interface' (HMI) and 'user interface' as used herein refer generally to an input facility enabling interaction between humans and machines. The interface may, for example, refer to a graphical user interface (GUI) operable to receive instruction via an input device such as a mouse or touch screen. In the context of the present invention, interactions of this type allow for the effective operation and control of the machine, possibly in correspondence with information simultaneously fed back from the machine to the human in order to aid the operators' decision-making process.

The term 'image sensor' as used herein refers generally to a sensor that detects and conveys information used to make an image. It does so by converting the variable attenuation of light waves into signals, small bursts of current that convey the information. The waves may be light or other electromagnetic radiation.

Turning now to the detailed description, some embodiments of the present invention provide an Adaptive Projected Reality (APR) device for use by, for example, builders, appraisers, architects, engineers, surveyors, inspectors and the like. The APR device may be used to project desired construction plans onto a target surface for the purposes of, for example, improving the accuracy and efficiency with which builders may progress a construction.

The term "construction plan", "construction plan model" or "as planned" as used herein refers to a digital 2D plan or a digital 3D plan in some embodiments it might refer to building information model (BIM) used in the process of planning a construction work and used during construction in a construction site.

The term "captured scene model", "'as built' model" or "as built" as used herein refers to actual surfaces and elements as recorded and sensed in the construction site during construction in a construction site.

The term "scene", as used herein refers to the area where the APR is being deployed for enabling the builders complete the construction works. The scene is a portion of the construction plan where the APR is deployed. The "projected visual content" or the "intended projection portion" is content that is taken from the construction plan and is intended for projecting on a specific surface which is within the scene.

The term 'RGBD' camera as used herein refers generally to a camera having the ability to capture distances and also RGB colors and/or gray scale color.

The term "register", "registered" or "registration" refers to the localization of a first device, e.g., a light projector, within a scene or construction site and providing a position within the scene or construction site to one or more mobile devices using electromagnetic radiation, e.g., position markers in form of light rays which are visible or non-visible to the human eye. Mobile devices may be adapted to retrieve or detect the position markers and may base or calculate augmented reality projections on the retrieved position markers.

The term 'markers' or 'position markers' as used herein refers to portions of content projected by the APR (either visible or non-visible light) that may be used for positioning it at the frame of reference of the scene. Markers may include points, lines (with infinite points), rectangles, Quick Response (QR) code, or any other shape, so it could be any part of the visual content and not necessarily a specific point on it.

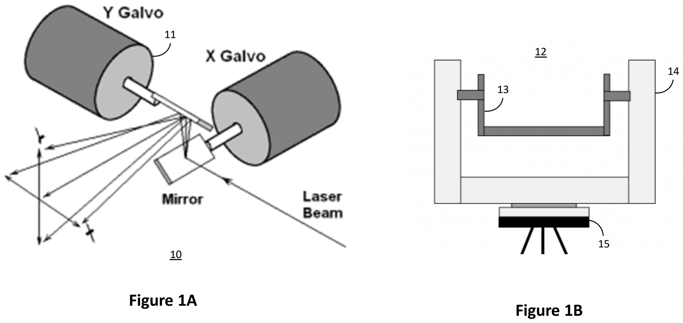

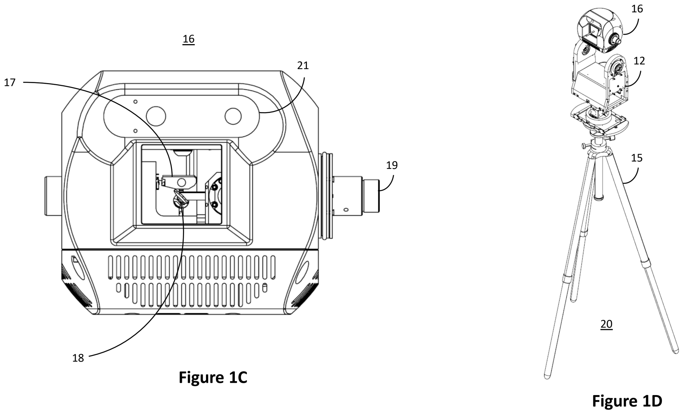

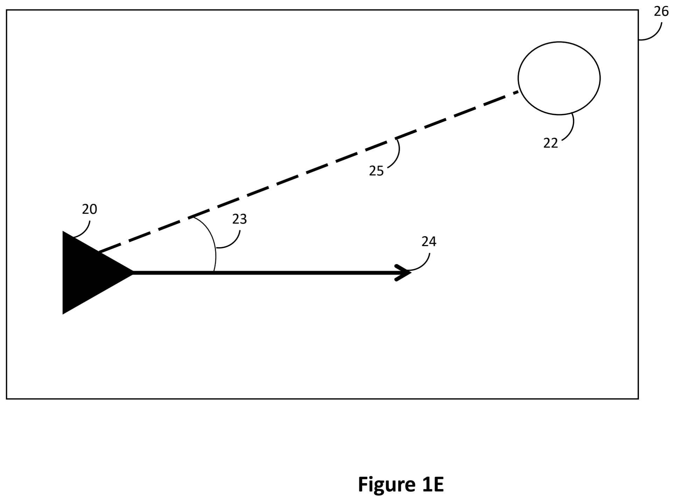

Figures 1A, 1B, 1C, 1D and 1E are high-level diagrams illustrating an exemplary laser projector system or survey tool 20 in accordance with some embodiments of the present invention. Laser projection system 20 includes a laser projector arrangement 16 including a two-axis electro-optic deflection unit 10 and at least one light source, both of which are mounted 19 onto a moveable platform 12. The light source is preferably a low divergence light source operable to emit collimated beams of light. The two-axis electro-optic deflection unit is preferably formed from a set of cooperating mirrors 17, 18 and galvanometers 11 and, optionally, includes a 2D camera and/or depth camera 21a, 21b. The moveable platform 12 may be connected to and/or mounted on a support structure 15, such as a tripod, stand, vehicle, robot or the like. The support structure may be configured to remain stationary relative to a construction site 26. Alternatively, the support structure may be configured to move in a predetermined or derivable pattern (e.g., using proximity sensors, or the like) relative to the construction site 26. Moveable platform 12 may further comprise mechanisms to pan 14 and/or tilt 13 the two-axis electro-optic deflection mounted thereon relative to the support structure 15. The laser projection system may further include a computer controller and a set of reference features/points 22 which are positioned within the construction site 26 and, optionally, appear on the plan, for use in establishing the tool's exact position (usually within a sub-centimeter tolerance) and orientation relative to the construction site (i.e., within the three-dimensional space). The projection system 20 may be aligned semi-manually by pointing a laser beam 24 emitted by the light source to the reference features/points 22 and using the bearing/steering angle reading 23 of the projection system 20 relative to a specific part of the survey tool such as support structure 15 to register the system's position. Range readings 25 may also be obtained by directing the laser beam 24 through a mirror and measuring the 'time of flight' with a laser distance meter, which optionally may be incorporated in the projection system 20. To achieve bearing and/or range localization, the system may use an angle 23, a range 25 or a combination of both to compute its position and orientation where localization based on bearing angle involves a triangulation computation and where localization based on range involves a trilateration computation. It may also be aligned automatically by scanning the scene with laser beams, which may be reflected by one or more retro reflectors (positioned on the reference features/points) back along the same optical path to a photodetector, which in turn allows the system to "read" the position.

Once the projector system 20 verifies its position in the build space, it may be operated to accurately and adaptively project the outline of features and elements for assisting in the construction process. System software may also be included to store imported computer-aided design (CAD) outlines of the features and elements (walls, pipes, air condition and the like) and adjust the scale and shape (orientation) of the projected outline to account for the system's three-dimensional position and orientation within the build space.

The projector arrangement 16 and moveable platform 12 cooperate to facilitate beam steering and comprises accurate beam angle position sensors (mirror angle/speed sensor or similar) and also incorporate a laser distance meter in the galvanometric scanner. For each reference feature/point, a user may aim the laser/light beam 14 at the point 22. A computer processor (CPU) may then calculate accurate bearing/steering angle data relative to support structure 15 from both the projector and the pan14 and tilt 13 mechanisms of the moveable platform 12 (utilizing an angular encoder, inclination sensor, accelerometer, gyroscope etc.) and may also acquire range data from a laser distance meter. The CPU may then calculate the position and orientation of the projector system 20 relative to the build space/construction site 26 based on at least one of the steering angle and the distance.

Based on position, orientation and pre-defined CAD drawings, the projector system 20 may project plans such as, for example, a template or blueprint, and related information, accurately and in alignment with surfaces within the construction site 26. The light source and the two-axis electro-optic deflection unit 10 operate under common control of the computing system to register their respective locations using the array of reference points/targets/work object features, converting all location information into a common coordinate system, and projecting information on the work surface with directional light beams using the common coordinate system.

According to some embodiments of the invention, there is provided a system comprising a 2D light projector attached to a two-axis electro-optic deflection unit 10. The pan 14 and tilt 13 mechanisms of moveable platform 12 may steer the projector in different orientations and enhance the projector coverage. A control system and user interface may also be provided to control the projector and, optionally, the pan 14 and tilt 13 mechanisms. The pan 14 and tilt 13 mechanism may further comprise accurate angle position sensors (encoder) or other similar methods of reading angle data.

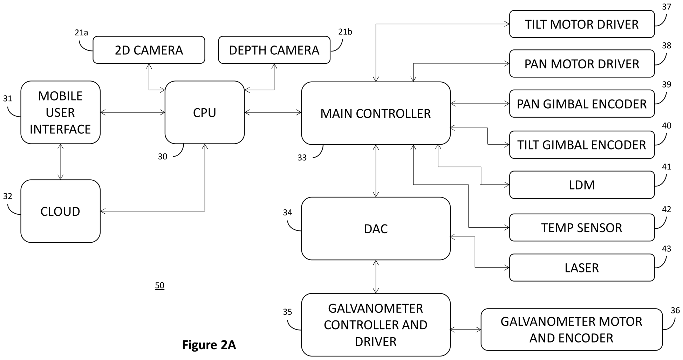

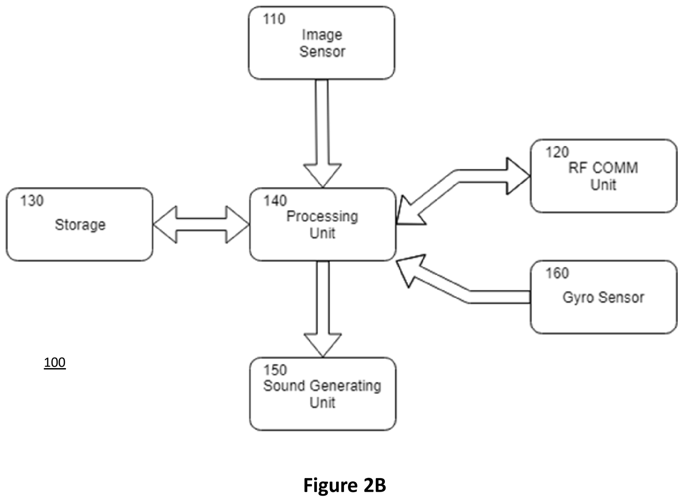

Figures 2A and 2B are high-level block diagrams illustrating non-limiting system arrangements 50, 100 in accordance with embodiments of the invention. System 50 for positioning and orientating a survey tool may include a central processing unit 30 operable to execute software and algorithms required to perform the operations explained throughout this disclosure. Operational instructions and commands may be issued to the system 50 by, for example, an operator over wired or wireless communication mediums using one or both of mobile user interface 31 and/or the cloud 32 and/or any storage device. Central processing unit 30 may be operably connected to a 2D camera 21a and/or a depth camera 21b and further to a main controller 33. Main controller 33 may be operably connected to motor drivers 37, 38 and encoders 39, 40 of the pan 14 and tilt 13 mechanisms of the moveable platform 12. Main controller may additionally be operably connected to one or more temperature sensors 42 and one or more laser distance measuring devices 41. Galvanometers 11 of the two-axis electro-optic deflection unit 10 may be controlled and measured by main controller 33, via a digital to analogue converter (DAC) 34, using galvanometer controller and driver 35 and galvanometer motor and encoder 36. Laser emitter 43 may additionally be controlled by main controller 33 via DAC 34.

System 100 for locating a point with a survey tool may include a processing unit 140 operable to execute software and algorithms required to perform the operations explained throughout this disclosure. The processing unit may take the form of a microcontroller, Digital Signal Processor (DSP), Central Processing Unit (CPU), Field Programmable Gate Array (FPGA) or any other suitable type of processing unit. An image sensor 110 may also be included and used as the surface upon which the laser beam from the laser projection system will be directed to.

The system 100 may also include a data storage facility 130 configured to store, for example, distance or steering angle data. A communications unit 120 may be included for communicating with the laser projection system via radio frequency, for example for the purposes of receiving operational commands or for transmitting back information pertaining to errors. The processing unit may additionally be operable to control a sound generator unit 150 and generate a unique sound (e.g., an ultra-sound signal) for initial positioning. A reference feature/point, for example such as one embodied as a trackable indicator or active positioning target (APT) which will be discussed in further detail below, may also be configured to transmit its pitch, yaw and roll orientations using an inbuilt sensor 160 to allow the laser projection system to calculate the exact location of the reference feature/point.

According to some embodiments of the invention, the process of determining the projector system's position and orientation may involve a two stage process involving a preliminary or rough-positioning stage and a refined or fine-positioning stage.

In the preliminary or rough positioning stage, the reference point or APT device may be detected to a lower degree of accuracy by several methods such as vision-based detection, radio frequency (RF) signal triangulation, sound triangulation and other methods suitable for rough positioning. For example, in some embodiments sound signals may be utilized. The processing unit may control the sound generator unit (150) to generate a unique sound (e.g., a specifically selected single frequency tone). The laser projection system may then continuously move upon its axes toward the sound captured by its microphone array using known acoustic location algorithms such as sound intensity triangulation, time difference of arrival, particle velocity etc.

Once the laser beam is located over a surface of the reference point or APT device, the refined or fine-positioning stage may be entered into, wherein the processing unit may acquire images from the image sensor and analyze the laser spot position on the image sensor using a laser spot detection algorithm or other suitable algorithm.

According to some embodiments of the invention, if less than three reference points or APT devices are available, additional sensors such as inclinometers or azimuth sensors may be integrated.

According to some embodiments of the invention, the image sensor may be part of a camera, or alternatively it may be part of a direct beam position sensor.

According to some embodiments of the invention, the survey tool may further include a further motorized mirror capable of further steering the beam and mounted on the movable platform.

According to some embodiments of the invention, the survey tool may further include dynamic focus optics, capable of dynamically changing the light beam focus responsive to instructions from the processing unit.

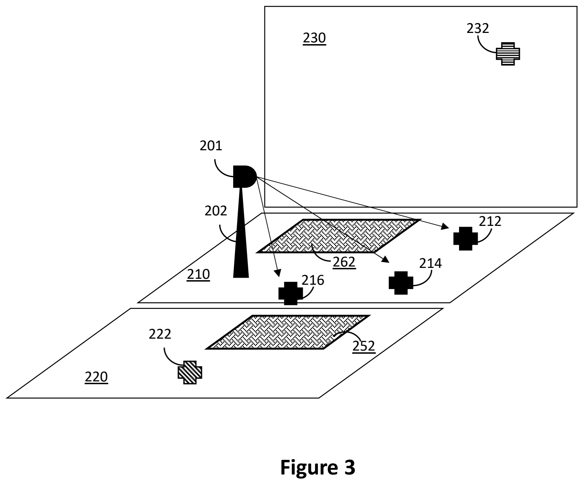

Figure 3 is a high-level diagram illustrating a laser projector registration process in accordance with some embodiments of the invention. Laser projector 201 (e.g., a laser scanner utilizing galvanometers) may be mounted on a movable platform, which itself may be mounted on a support structure 202 (e.g., a tripod arrangement) and located in a construction site featuring a plurality of projection surfaces 210, 220 and 230. In order to be able to cover all three surfaces (which in this environment are beyond the remit of a single FOV of the laser projector 201) the following two-stage process is proposed, in accordance with embodiments of the present invention.

In a first stage, registration is achieved by making steering angle and/or distance measurements on each reference point (e.g., reference points 212, 214 and 216, which all lie within surface 210) and therefrom estimating the position and the orientation of the system. This may be achieved by moving the light scanner mirrors and/or moveable platform until a laser point is positioned on the first reference point; reading the steering angle and/or distance of the first reference point relative to any specified part of the survey tool such as support structure 202; repeating the process for all reference points; and using a triangulation or trilateration algorithm to estimate the position and orientation of the system within the build space. The movement of the light scanner mirrors and/or moveable platform may be controlled manually by an operator using a control device such as, for example, a joystick, or automatically by using a camera in addition with computer vision algorithms to move the laser point towards each reference point. It will be appreciated that any other automated method or algorithm known by those skilled in the art may also be utilized.

In some embodiments, one or more of the reference points may be located beyond the initial FOV of the laser projector 201 (e.g., reference points 222 or 232). In such circumstances, the laser projector 201 may be moved or rotated using the movable platform and/or light scanner mirrors may be used to measure the reference point(s) within and outside of the FOV to collect their data. It should be noted that the order in which each reference point is measured is unimportant, and, in some instances, all reference points may be located outside of the initial FOV of the laser projector 201.

In a second stage, content 262 may be projected in a conformal and registered manner upon one or more projection surfaces 210. In circumstances where several projection tiles may be required, for instance where content 252 is to be projected upon surface 220, the moveable platform and/or light scanner mirrors may be operated to direct laser projector 201 to the required surface without any loss of registration or alignment. This may be done either manually by an operator or automatically through use of suitable computer algorithms using sensor readings obtained from, for example, pan/tilt encoders.

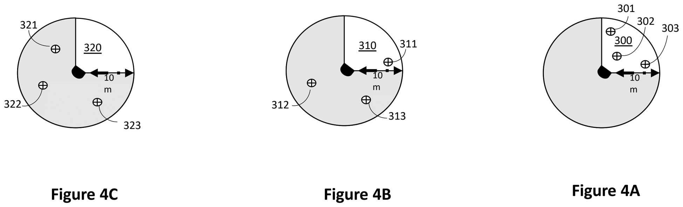

Figures 4A, 4B and 4C are high-level diagrams illustrating one use case of a laser projector in accordance with some embodiments of the invention. As shown in Figure 4A, there may be a plurality of reference points 301, 302 and 303 present on a surface within the build space, wherein each of reference points are located within an initial FOV 300 of the laser projector, providing a relatively simple procedure for the user.

As shown in Figure 4B, there may alternatively be circumstances where out of three reference points 311, 312 and 313 present on a surface within the build space, only one reference point 311 lies within an initial FOV 310 of the laser projector. Two additional reference points 312 and 313 are therefore located outside of said initial FOV, which will be the usual case for users who may need to realign the laser projector using, for example, the light scanner mirrors and/or moveable platform, to detect the angles and/or ranges of the reference points outside of the initial FOV.

As shown in Figure 4C, there may also be circumstances where out of three reference points 321, 322 and 323 present on a surface within the build space, none are located within the initial FOV 320 of the laser projector. This use case is more unusual and may present the user with a more challenging process requiring multiple realignments of the laser projector using, for example, the light scanner mirrors and/or moveable platform, to achieve multiple FOVs until all required reference points are detected.

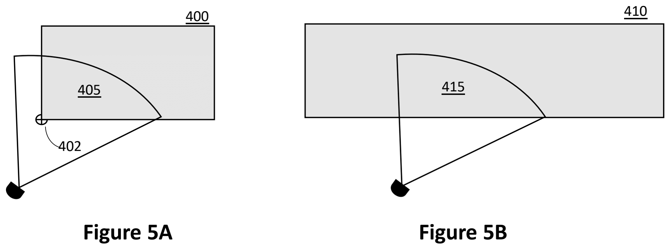

Figure 5A and 5B are high-level diagrams illustrating another use case of a laser projector in accordance with some embodiments of the invention. As shown in Figure 5A, in the use case of projecting content onto a surface such as wall 400, there may be one or more known reference points 402 located within the field of view 405 of the laser projector, in which case the range and/or angle of that reference point may be measured as standard. Alternatively, as shown in Figure 5B, in the use case of projecting content onto a surface such as wall 410, there may be no known reference points located within the field of view 415 of the laser projector. In such circumstances, the operator may be required to realign to the laser projector using, for example, the light scanner mirrors and/or moveable platform, to obtain a different FOV in order to locate a known reference point and thereafter determine its range and/or angle relative to the laser projector.

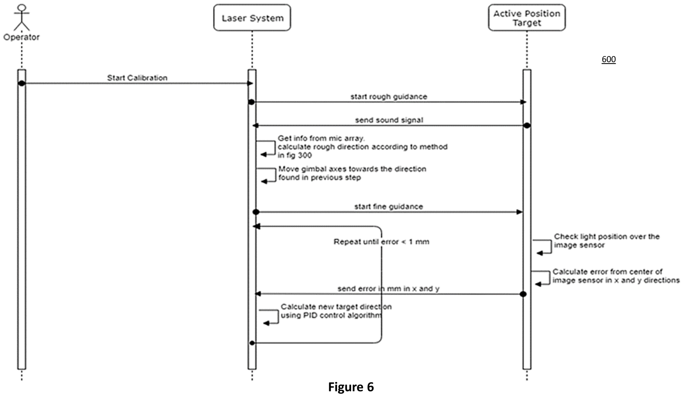

Figure 6 is a high-level flow diagram illustrating an exemplary method 600 in accordance with embodiments of the present invention. Method 600 depicts a full exemplary sequence of interactions between a laser projection system according to embodiments of the invention and a reference point embodied as an APT device. The sequence commences when an operator or user inputs a request for the laser projection system to begin an environment registration/calibration process. In some embodiments, this may be achieved by pushing a button on the laser projection system or by inputting/sending a command from, for example, a mobile app or HMI. The laser system may begin scanning for existing APT devices located within its range. For each identified APT device the laser system may send a command to initiate preliminary or rough-positioning guidance, which will cause the APT device to continuously generate a signal, for example a sound or radio frequency (RF) signal. The emitted signal may be captured by, for example, a microphone/antenna array of the laser projection system and may be used to calculate the specific direction in which to move the laser projection system axes, in order to roughly point towards the APT device in question.

According to some embodiments of the invention, an additional step may be conducted to increase the accuracy of the rough positioning, in particular by adding a camera component to the laser projection system which may assist in directing the laser beam to a surface of the APT device, using computer vision methods or the like.

Once the preliminary or rough-positioning step is complete, the APT device and the laser projection system may begin a refined or fine-positioning step. To achieve this, the APT device may be configured to continuously acquire images, recognizing the center of the laser spot on an image sensor of the APT device and sending the error of the laser spot relative to a center of the image sensor back to the laser projection system, for example in units of millimeters or pixels.

The laser projection system may continue to redirect itself towards the center of the APT device using any appropriate control algorithm, such as a Proportional Integral Derivative (PID) controller, to provide a control loop feedback mechanism with which to minimize the error to a suitable degree to ensure that the distance between the laser beam spot and the center of the image sensor of the APT device is lower than some predefined threshold. In some embodiments, this error threshold may be < 1mm. Once this is achieved, the laser system may record the location of the APT device and orientation together with the position and orientation of the laser projection system itself.

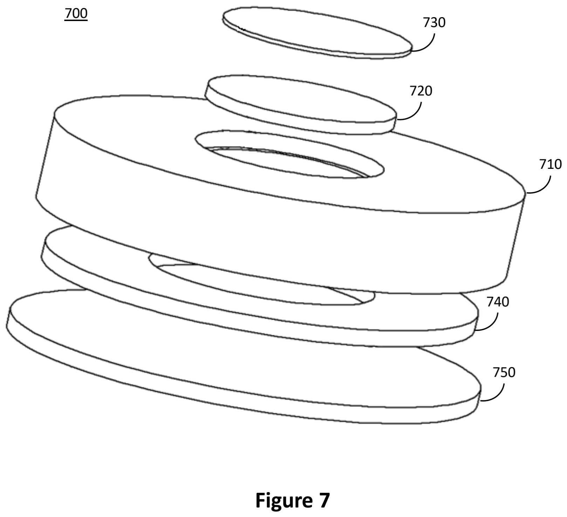

Figure 7 is a high-level diagram illustrating an exemplary electro-optic APT device 700 in accordance with embodiments of the invention. The APT device may comprise a disk-shaped case 710 configured to enclose a Printed Circuit Board (PCB) 740 which may include, for example, the gyro sensor component 160 of laser projection system 100 (see Figure 2b). The enclosure may be closed by a case cover 750. An image sensor may also be located on the PCB, for example, in some embodiments, in its center. Above the image sensor, the APT device may additionally comprise a lens 720 and a filter 730 operable to transmit, for example, only the narrowband wavelength (e.g., 532nm) corresponding to the laser beam emitted from the laser projection system.

According to some embodiments of the invention, a rechargeable battery may also be included in the enclosure to provide power to the PCB components. The APT device 700 may be fully mobile and thus may not require any power cable during usage. The device may also be charged in a designated charging unit, as required.

According to some embodiments of the invention, the geometric computation carried out by the laser projection system may comprise a triangulation or trilateration process.

According to some embodiments of the invention, an operator may record the coordinates of a reference point onto an APT device via a mobile application.

According to some embodiments of the invention, a user may record the coordinates of a reference point onto an APT device via a human-machine interface "HMI".

According to some embodiments of the invention, position data may be recorded onto an APT device using a positioning sensor system, such as a Global Positioning Satellite (GPS) sensor system.

According to some embodiments of the invention, the preliminary or rough-positioning signal generator may be a sound generator.

According to some embodiments of the invention, the preliminary or rough-positioning signal generator may be Bluetooth 5.1.

According to some embodiments of the invention, the at least one light source comprises a laser.

According to some embodiments of the invention, the at least one sensor comprises a laser distance meter.

According to some embodiments of the invention, the at least one sensor comprises a rotary encoder.

According to some embodiments of the invention, the at least one two-axis electro-optic deflection unit has a steering angle narrower than that of the steering angle of the moveable platform, and wherein the at least one two-axis electro-optic deflection unit has an angular velocity higher than that of the angular velocity of the moveable platform.

According to some embodiments of the invention, the at least one two-axis electro-optic deflection unit comprises a galvanometer and wherein the moveable platform comprises a pan/tilt gimbal.

According to some embodiments of the invention, the survey tool further comprises at least one inclination sensor configured to record an inclination angle of the survey tool relative to an Earth centered frame of reference.

According to some embodiments of the invention, the survey tool further comprises at least one three-dimensional (3D) camera configured to record a 3D model of at least one of: the construction site; and objects and people within the construction site.

According to some embodiments of the invention, the survey tool further comprises at least one two-dimensional (2D) camera configured to record 2D images of at least one of: the construction site; and objects and people within the construction site.

According to some embodiments of the invention, the survey tool further comprises deriving a 3D model of the construction site by projecting laser patterns onto one or more surfaces within the construction site and recording the projected pattern with the 2D camera, and therefrom calculating the 3D model based on the recorded pattern.

According to some embodiments of the invention, the determined P&O of the survey tool relative to the construction site comprises 6 degrees of freedom (6DOF).

According to some embodiments of the invention, the at least one sensor is configured to record at least two steering angles or at least two distances to at least two different points on surfaces within the construction site, wherein coordinates of the points are known within the construction site and the construction plan, and wherein the at least one computer processor is configured to determine the P&O of the survey tool using triangulation or trilateration based on additional data and at least one of: the at least two steering angles; and the at least two distances to the at least two different points.

According to some embodiments of the invention, the additional data comprises at least one of: pre-existing knowledge including the coordinates of an additional point within the construction site; coordinates of the survey tool within the construction site; a height and azimuth of the survey tool; and an inclination angle of the survey tool relative to an Earth centered frame of reference or a surface and azimuth.

According to some embodiments of the invention, the computer processor is further configured to instruct the survey tool to: perform depth scanning of at least three points within the construction site and therefrom estimate a 3D model of at least one surface within the construction site; calculate a projection image which includes a portion of a 2D construction plan featuring one or more physical objects appearing within the construction site, wherein the projection image is adjusted based on the estimated 3D model; project the projection image onto the at least one surface of the construction site, wherein the projection image is rendered at a scale corresponding to the dimensions of the at least one surface; steer the projection image to align with the one or more physical objects appearing within the construction site; and calculate the P&O of the survey tool based on the P&O of the projected projection image.

According to some embodiments of the invention, the computer processor is further configured to vary at least one of: the steering angle of the light beam aimed at a surface within the construction site; and the distance between the survey tool and a surface within the construction site, to automatically locate a point by: attaching at least one trackable indicator to a surface within the construction site to define said point at a predefined location, wherein the at least one trackable indicator comprises: an ultrasound (US) beacon, a radio frequency (RF) beacon, or a visual indicator; carrying out preliminary tracking for the point using one or more of: an US tracker, a RF tracker, or an optical tracker, to identify a sector of the construction site that includes the point; refining the preliminary tracking of the point by projecting a collimated light beam at the identified sector of the construction site; and using an active or passive feedback mechanism in relation to the projected collimated light beam to determine an accurate direction of the point relative to the survey tool.

According to some embodiments of the invention, the at least one sensor is configured to record at least two steering angles or at least two distances to at least two different points on surfaces within the construction site, wherein coordinates of the points are known within the construction site and construction plan, and wherein the at least one computer processor is configured to determine the P&O of the survey tool using triangulation or trilateration based on additional data and at least one of: the at least two steering angles; and the at least two distances to the at least two different points.

According to some embodiments of the invention, the additional data comprises at least one of: pre-existing knowledge including the coordinates of an additional point within the construction site; coordinates of the survey tool within the construction site; a height and azimuth of the survey tool; and an inclination angle of the survey tool relative to an Earth centered frame of reference or a surface and azimuth.

According to some embodiments of the invention, steering the at least one light source further comprises: capturing, using a camera, images of a light spot of said light beam on one or more surface within the construction site; displaying the captured images of the light spot on a display to a user; overlaying a cursor at a desired location for the light spot on the displayed images; and automatically steering the light beam towards the desired location responsive to an input made by the user in relation to the cursor.

According to some embodiments of the invention, the computer processor is further configured to: obtain a floor plan of the construction site; obtain coordinates of a first position of the survey tool within the construction site; scan the construction site from the first position and therefrom construct a position map of the first position, wherein upon a re-stationing the survey tool to a second position within the construction site, the computer processor is further configured to: scan the construction site from the second position and therefrom construct a position map of the second position; and calculate a displacement vector denoting the re-stationing of the survey tool from the first position to the second position by comparing the position map of the second position to the position map of the first position.

According to some embodiments of the invention, the computer processor is further configured to: obtain a floor plan of the construction site; obtain coordinates of a first position of the survey tool within the construction site; scan the construction site from the first position and therefrom construct a position map of the first position; register the position map of the first position onto the floor plan, to yield a registered position map of the first position, wherein upon a re-stationing the survey tool to a second position within the construction site, the computer processor is further configured to: scan the construction site from the second position and therefrom construct a position map of the second position; and calculate a displacement vector denoting the re-stationing of the survey tool from the first position to the second position by comparing the position map of the second position to the registered position map of the first position.

According to some embodiments of the invention, a dual registration-projection system is proposed, comprising: a two-dimensional light projector comprising a light scanner configured to direct a light beam in selected directions with measurable angles within a field of view "FOV"; and a computer processor configured to: receive three or more readings of angles of the light beam responsive to directing the light beam to three or more reference points having known locations within a construction site and a floor plan; register, based on the readings and other positional data inputs, the position and orientation of the light projector within the construction site; and instruct the light projector to project a floor plan portion onto a surface within the construction site, wherein said floor plan portion is registered to said surface.

According to some embodiments of the invention, a method of dual registration and projection within a scene is proposed, comprising the steps of: pointing a directional light beam from a light projector at two or more reference points within a field of view "FOV"; automatically monitoring the angles and/or ranges of the two or more reference points; acquiring the position and orientation of each of the two or more reference points relative to the light scanner; registering based on the readings and other positional data inputs the position and orientation of the light scanner within the scene; and projecting predefined content upon a first surface within the scene.

According to some embodiments of the invention, a system for automatic positioning of a laser projection system within a site is proposed, comprising: a plurality of Active Positioning Target "APT" devices comprising: a processing unit, an image sensor, a radio frequency "RF" communication device and a rough-positioning signal generator; a plurality of reference points located in a scene; and a laser projection system; wherein an individual APT device is configured to store the recorded coordinates of an identified reference point and be placed atop said reference point; said APT device is configured to guide a laser beam from the laser projection system firstly using said rough-positioning signal generator and secondly using said image sensor to fine tune the direction of said laser beam towards its center; and said fine tuning is looped iteratively to more accurately direct the laser beam; wherein at least three reference point positions are identified, and their associated APT devices are in communication with the laser projection system which is configured to determine the position of said laser projection system via geometric computation of the reference point positions.

According to some embodiments of the invention, a method of automatic positioning of a laser projection system within a site is proposed, comprising: identifying a physical reference point within a scene; recording the coordinates of the reference point into an Active Positioning Target "APT" device; placing the active APT device upon the reference point; wherein the identifying, recording and placing is repeated until three or more reference points are identified with corresponding active APT devices; and calibrating said laser projection system by: generating a rough position signal from the APT; guiding a laser beam from the projection system using said signal; and fine tuning the guiding of the laser beam using an inbuilt image sensor within the APT; and iteratively looping the fine tuning to direct the laser beam to the center of the image sensor; and determining the laser projection system position via a geometric computation of the three or more reference point positions.

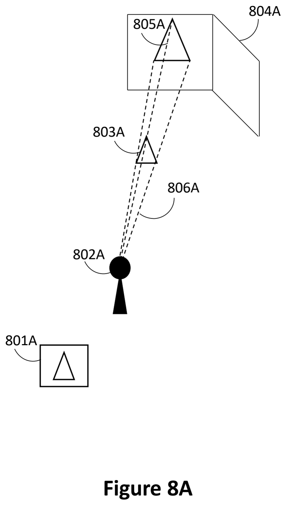

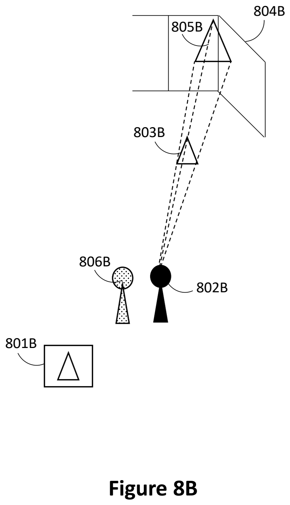

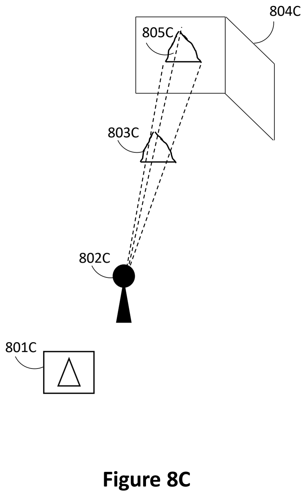

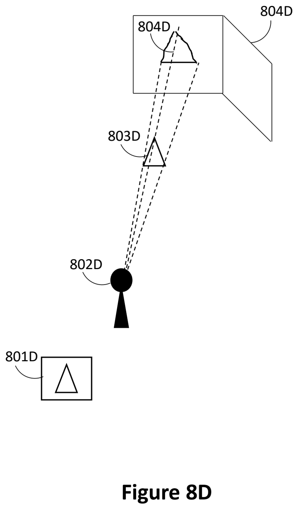

Figure 8A, Figure 8B, Figure 8C, and Figure 8D are high-level diagrams depicting a projector within a construction site in accordance with some embodiments of the present invention.

In Figure 8A, projector 802A is positioned in a known position within a construction site and receives a portion of construction plan 801A to be projected on a specific surface 804A in the construction site. In such a case, the image projected 803B by the projector will reach the intended portion on the specific surface and result in a projected image 805A on a location, orientation, and scale as intended.

In Figure 8B, projector 802B is positioned in a position within a construction site and receives a portion of construction plan 801A to be projected on a specific surface 804B in the construction site. In case that the position is erroneous, and the correct position is 806B, then the image projected 803B by the projector will reach a different portion than intended on the specific surface and result in a projected image 805B on a location or orientation or even a scale that is different from intended.

In Figure 8C, projector 802C is positioned in a correct position within a construction site and receives a portion of construction plan 801C to be projected on a specific surface 804C in the construction site. In the case that projector 802C is faulty, the image projected 803C by the projector is deformed resulting in a projected image 805C to be deformed and different from intended.

In Figure 8D, projector 802D is positioned in a correct position within a construction site and receives a portion of construction plan 801D to be projected on a specific surface 804C in the construction site. In case that the specific 804D surface was built incorrectly, then the image projected 803D by the projector will reach a geometrically different surface than intended and result in a projected image 805D to be deformed and different from intended.

In order to address the aforementioned deformations, in according to some embodiments of the present invention, a system for projecting a portion of a construction plan within a construction site, is provided herein. The system may include: a light projector configured to project an image associated with the portion of the construction plan onto at least one specific surface within the construction site, by projecting a set of vectors, starting at an XYZ position within the light projector and ending at respective XYZ coordinates; at least one sensor configured to record at least some of: a set of XYZ coordinates of the at least one specified surface, and a set of XYZ coordinates of the image as projected on the specific surface; and a computer processor configured to: generate, based on the construction plan, an "as planned" model representing surfaces and elements as planned in the construction plan; derive, from the construction plan, an intended projection portion which includes visual content and dimensional data intended to be projected on the specific surface; calculate XYZ coordinates for the intended projection portion, based on the "as planned" model and the XYZ position of the light projector; compare the XYZ coordinates recorded by the sensor with the XYZ coordinates for the intended projection portion, to detect respective XYZ displacements; generate a modified projection portion based on the detect respective XYZ displacements, wherein the light projector is further configured to project said modified projection portion onto the specific surface.

In another embodiment, a system for projecting a portion of a construction plan within a construction site is provided herein. The system may include: a light projector configured to project an image associated with the portion of the construction plan onto at least one specific surface within the construction site, by projecting a set of vectors, starting at an XYZ position within the light projector and ending at respective XYZ coordinates; at least one sensor configured to record at least some of: a set of XYZ coordinates of the at least one specified surface, and a set of XYZ coordinates of the image as projected on the specific surface; and a computer processor configured to: generate, based on the construction plan, and the XYZ coordinates recorded by the sensor, an "as built" model representing surfaces and elements as built in the construction site; derive, from the construction plan, an intended projection portion which includes visual content and dimensional data intended to be projected on the specific surface; calculate XYZ coordinates for the intended projection portion, based on the "as built" model and the XYZ position of the light projector; wherein the light projector is further configured to project the intended projection portion onto the specific surface with the calculated XYZ coordinates for the intended projection portion.

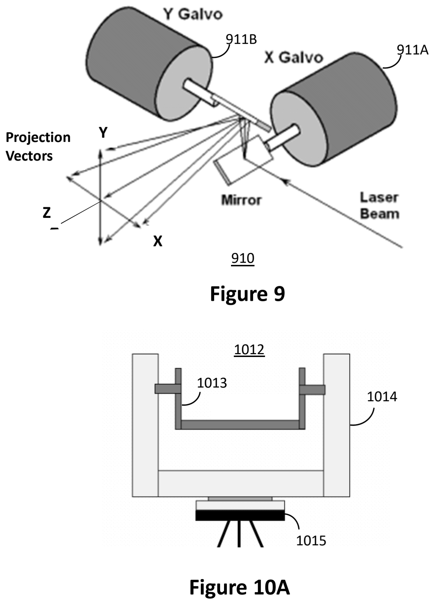

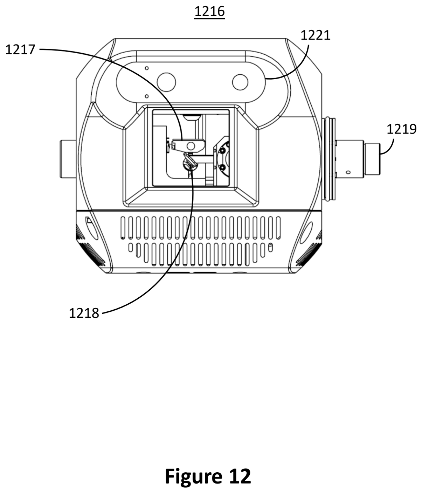

Figure 9, Figure 10A, Figure 11, and Figure 12 are high-level diagrams illustrating an exemplary laser projector system or survey tool 1120 in depicting an exemplary architecture for implementing the aforementioned systems accordance with some embodiments of the present invention. The laser projection system 1120 includes a laser projector arrangement 1216 including a two-axis electro-optic deflection unit 910 and at least one light source, both of which are mounted 1219 onto a moveable platform 1112. The light source is preferably a low divergence light source operable to emit collimated beams of light. The two-axis electro-optic deflection unit is preferably formed from a set of cooperating mirrors 1217, 1218 and galvanometers 1211 and, optionally, includes a 2D camera and/or depth camera 1221. The moveable platform 1212 may be connected to and/or mounted on a support structure 1215, such as a tripod, stand, anchor, mounting, vehicle, robot or the like. The support structure may be configured to remain stationary relative to a construction site. Alternatively, the support structure may be configured to move manually or in a motorized way , it might also move in a predetermined or derivable pattern (e.g., using proximity sensors, camera, motion sensors or the like) relative to the construction site 1226. Moveable platform 1212 may further include mechanisms to pan 1014 and/or tilt 1013 the two-axis electro-optic deflection mounted thereon relative to the support structure 1015. The laser projection system may further include a computer controller and a set of reference features/points which are positioned within the construction site and, optionally, appear on the plan, for use in establishing the tool's exact position (usually within a sub-centimeter tolerance) and orientation relative to the construction site (i.e., within the three-dimensional space). The projection system 1120 may be aligned semi-manually by pointing a laser beam emitted by the light source to the reference features/points and using the bearing/steering angle reading of the projection system 1120 relative to a part of the survey tool to register the system's position. Range readings may also be obtained by directing the laser beam and measuring the 'time of flight' with a laser distance meter, which optionally may be incorporated in the projection system 1120. To achieve bearing and/or range localization, the system may use an angle, a range of laser or a combination of both to compute its position and orientation where localization based on bearing angle involves a triangulation computation and where localization based on range involves a trilateration computation. It may also be aligned automatically by scanning the scene with laser beams, which may be reflected by one or more retro reflectors (positioned on the reference features/points) back along the same optical path to a photodetector, which in turn allows the system to "read" the position.

Once the projector system 1120 verifies its position in the build space, it may be operated to accurately and adaptively project the outline of features and elements for assisting in the construction process. System software may also be included to store imported digital plans or patterns which outline the features and elements (walls, pipes, air condition and the like) and adjust the scale and shape (orientation) of the projected outline to account for the system's three-dimensional position and/or orientation within the build space and/or its position and/or orientation relative to surfaces on which projector projects onto.

The projector arrangement 1116 and movable platform 1112 cooperate to facilitate beam steering and include accurate beam angle position sensors (mirror angle/speed sensor or similar) and also incorporate a laser distance meter in the galvanometric scanner. For each reference feature/point, a user may aim the laser/light beam 1114 at the point. A computer processor (CPU) may then calculate accurate bearing/steering angle data relative to support structure 1115 (or other part of the survey tool) from both the projector and the pan 1014 and tilt 1013 mechanisms of the moveable platform 1112 (utilizing an angular encoder, inclination sensor, accelerometer, gyroscope etc.) and may also acquire range data from a laser distance meter. The CPU may then calculate the position and orientation of the projector system 1120 relative to the build space/construction site based on at least one of the steering angle and the distance.

Based on position, orientation and pre-defined digital drawings, the projector system 1120 may project plans such as, for example, a template or blueprint, and related information, accurately and in alignment with surfaces within the construction site. The light source and the two-axis electro-optic deflection unit 910 operate under common control of the computing system to register their respective locations using the array of reference points/targets/work object features, converting all location information into a common coordinate system, and projecting information on the work surface with directional light beams using the common coordinate system.

According to some embodiments of the invention, there is provided a system including a 2D light projector attached to a two-axis electro-optic deflection unit 910. The pan 1014 and tilt 1013 mechanisms of the moveable platform 1012 may steer the projector in different orientations and enhance the projector coverage. A control system and user interface may also be provided to control the projector and, optionally, the pan 1014 and tilt 1013 mechanisms. The pan 1014 and tilt 1013 mechanism may further include accurate angle position sensors (encoder) or other similar methods of reading angle data.

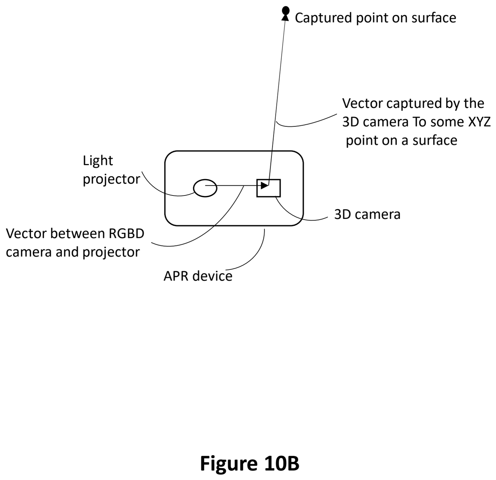

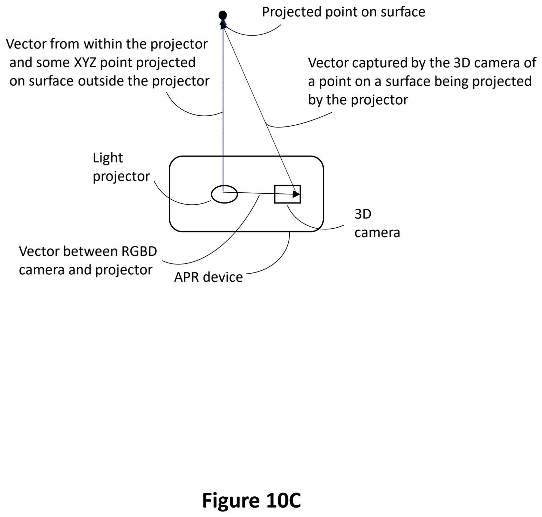

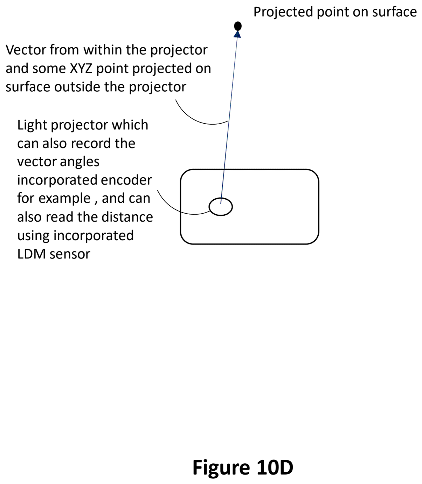

Figure 10B shows how a 3D camera (e.g., an RGBD camera) can derive a vector towards a captured point on a surface and then by obtaining a vector between the 3D camera and the projector, derive the vector from the projector to the point. Figure 10C sows how the 3D camera derive the vector to a point projected by the vector and based on the vector from the projector to the 3D camera, the vector from the projector to the projected point is calculated. Figure 10D shows how, without a 3D camera, but by using the projector as an LDM, the vector from the light projector to the projected point is being calculated.

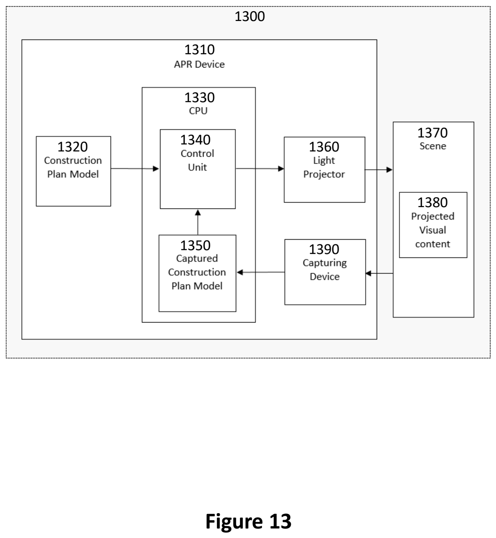

Figure 13 is a high-level diagram illustrating a non-limiting system 1300 configured to allow control of an APR device according to embodiments of the invention. System 1300 may include an APR device 1310 as detailed above. The APR device may include construction plan model 1320 that describes the projection model and/or the scene model. The APR device may also include a light projector 1360 that projects visual content 1380 over a scene 1370. The APR device may also include a capturing device 1390 that captures the projected visual content 180 within scene 1370. The APR device may also include a computer processor unit (CPU) 1330 that receives information form the capturing device 1390 and construction plan model 1320, and outputs information to the light projector 1360. The CPU 1330 may include a control unit 1340 that compares the construction plan model 1320 and the captured construction plan model 1350 and generates the output from the light projector 1360. The captured construction plan model 1350 is a model of the captured construction plan that was captured by the capturing device 1390.

In some embodiments, the capture device 1390 is a two-dimensional (2D) camera, three-dimensional (3D) RGB camera or any other device that is able to capture images of both the scene 1370 and the projected visual content 1380.

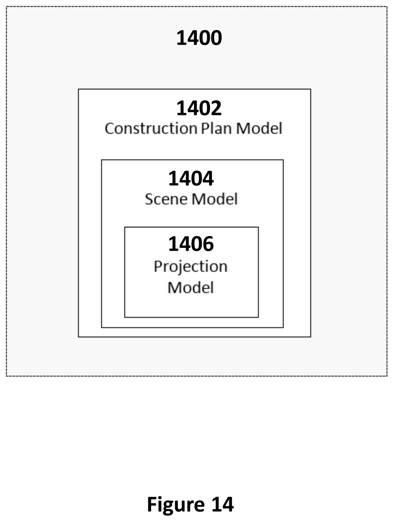

Figure 14 depicts the construction plan model 1402. The construction plan model 1402 may include a scene model 1404 and a projection model 1406. The scene model 1404 may be represented by a set of data structures, a CAD file or other ways to model a physical scene. The projection model 1406 may also be represented by a set of data structures, a CAD file or other ways to model a desired projection.

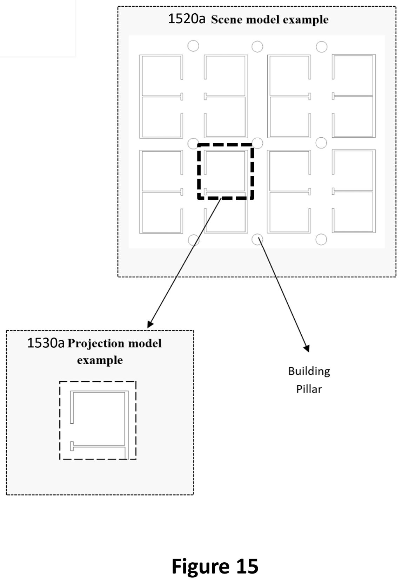

Figure 15 illustrates a realistic example for the model of Figure 14. A partition floor plan, that may be part of the construction plan model 1402 is shown. The scene model example 1520a shows a plan including a 16-room partition along with the position of a set of building pillars. The projection model example 1530a includes one single room that may be projected by the APR device on the real scene.

In some embodiments, the projection model 1406 is either automatically extracted from a construction plan or selected manually by a user, via a user interface.

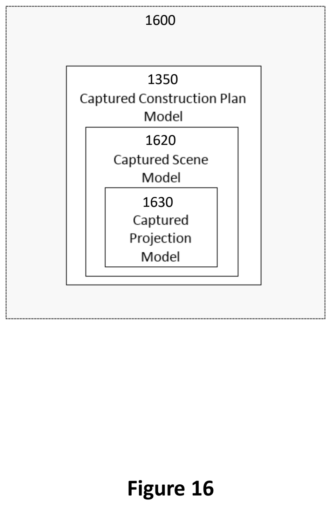

Figure 16 depicts the captured construction plan model 1350. The captured construction plan model 1350 may include a captured scene model 1620 and a captured projection model 330. The captured scene model 1620 may be represented by a set of data structures, a CAD file or other ways to model the captured physical scene. The captured projection model 1630 may also be represented by a set of data structures, a CAD file or other ways to model the captured desired projection.

In some embodiments, the captured scene model 1620 is obtained from either a real plan (as designed) or a build plan, taken from an APR build.

In some embodiments, if the captured scene model 1620 is significantly different from the scene model 1620, above a predetermined threshold error, a flag may be raised to inform the user about it.

In some embodiments, if the captured projection model 1630 is significantly different from the projection model 1630, above a predetermined threshold error, a flag is raised to inform the user about it.

In some embodiments, the construction plan format is dwg, svg, rvt, ifc, pdf, txt or any suitable other file format.

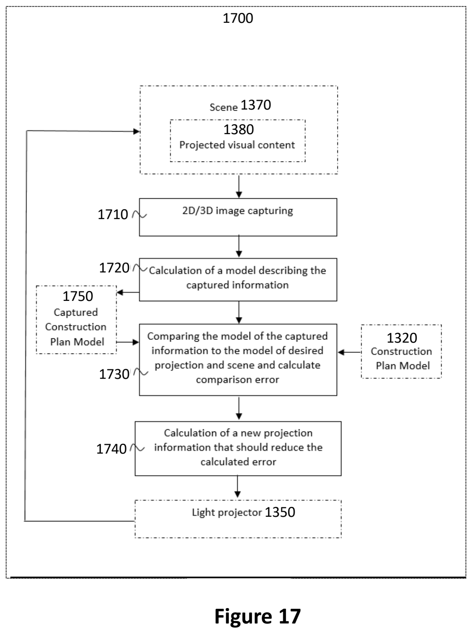

Figure 17 is a high-level block-diagram illustrating a non-limiting exemplary control unit operation according to embodiments of the invention. In some embodiments, step 1710 includes capturing the projected visual content 1380 and/or the scene 1370 by a capturing device. In step 1720 a calculation of a model describing the captured information is made to produce a captured construction plan model 1750. In step 1730, a comparison is made between the construction plan model 1320 and the captured construction plan model 1750. As a result, a comparison error metric is calculated to describe the accuracy of the projection. In step 1740, new projection information is calculated, aiming to reduce the comparison error, and thus making the projection more accurate. The projection information is sent to the light projector 1350. The operation of the control unit is repeated until a desired comparison error is achieved.

In some embodiments, the error value, calculated in step 1730, between the construction plan model 1320 and the captured construction plan model 1750 is calculated using methods like Euclidean distance, recursive estimation or other similar methods.

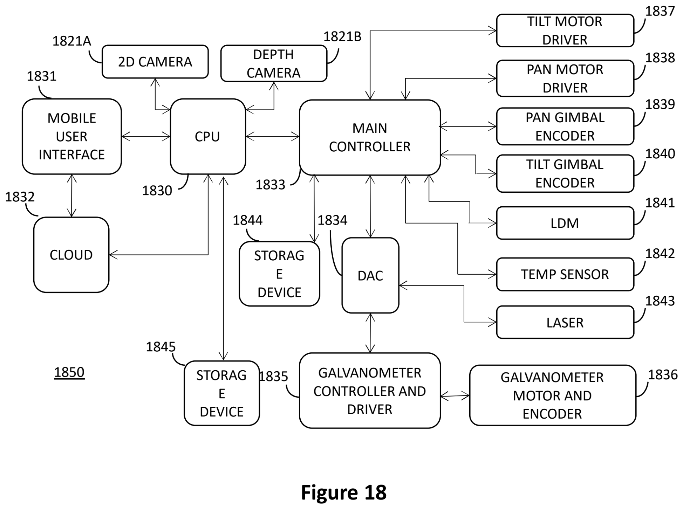

Figure 18 is high-level block diagrams illustrating non-limiting system arrangements 1850 in accordance with embodiments of the invention. System 1850 for adjusting the projector may include a central processing unit 1830 operable to execute software and algorithms required to perform the operations explained throughout this disclosure. Operational instructions and commands may be issued to the system 1850 by, for example, an operator over wired or wireless communication mediums using one or both of mobile user interface 1831 and/or the cloud 1832 and/or any storage device. Central processing unit 1830 may be operably connected to a 2D camera 1821A and/or a depth camera 1821B and further to a main controller 1833. Main controller 1833 may be operably connected to motor drivers 1837, 1838 and encoders 1839, 1840 of the pan 1014 and tilt 1013 mechanisms of the moveable platform 1012. Main controller may additionally be operably connected to one or more temperature sensors 1842 and one or more laser distance measuring devices 1841. Galvanometers 911 of the two-axis electro-optic deflection unit 910 may be controlled and measured by main controller 1833, via a digital to analogue converter (DAC) 1834, using galvanometer controller and driver 1835 and galvanometer motor and encoder 1836. Laser emitter 1843 may additionally be controlled by main controller 1833 via DAC 1834. Storage devices 1844 and 1845 are connected to the CPU and controller respectively and provide the relevant construction plans and other data and instructions required for the operation of the system.

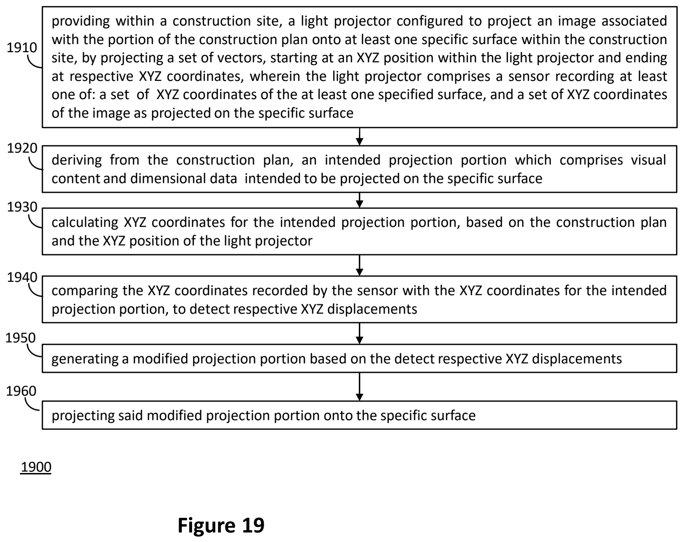

Figure 19 is a high-level flowchart diagram illustrating an method 1900 in accordance with embodiments of the present invention. Method 1900 of projecting a portion of a construction plan within a construction site, and may include the following steps: providing within a construction site, a light projector configured to project an image associated with the portion of the construction plan onto at least one specific surface within the construction site, by projecting a set of vectors, starting at an XYZ position within the light projector and ending at respective XYZ coordinates, wherein the light projector includes a sensor recording at least some of: a set of XYZ coordinates of the at least one specified surface, and a set of XYZ coordinates of the image as projected on the specific surface 1910; deriving from the construction plan, an intended projection portion which includes visual content and dimensional data intended to be projected on the specific surface 1920; calculating XYZ coordinates for the intended projection portion, based on the construction plan and the XYZ position of the light projector 1930; comparing the XYZ coordinates recorded by the sensor with the XYZ coordinates for the intended projection portion, to detect respective XYZ displacements 1940; generating a modified projection portion based on the detect respective XYZ displacements; and projecting said modified projection portion onto the specific surface 1950.

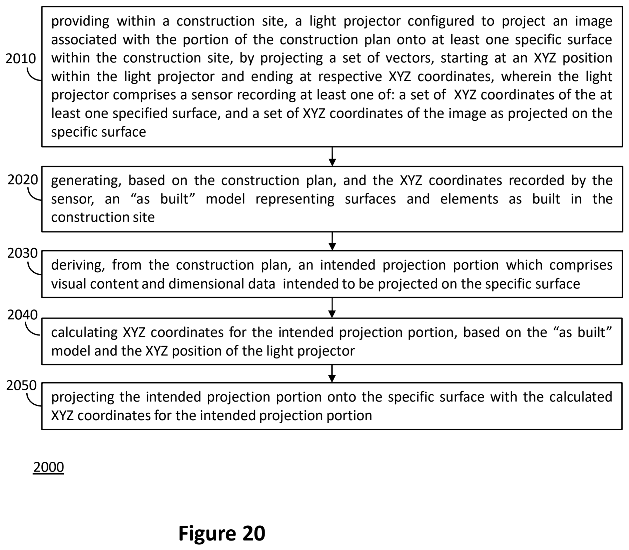

Figure 20 is a high-level flowchart diagram illustrating a method 2000 in accordance with embodiments of the present invention. Method 2000 of projecting a portion of a construction plan within a construction site may include the following steps: providing within a construction site, a light projector configured to project an image associated with the portion of the construction plan onto at least one specific surface within the construction site, by projecting a set of vectors, starting at an XYZ position within the light projector and ending at respective XYZ coordinates, wherein the light projector include a sensor recording at least some of: a set of XYZ coordinates of the at least one specified surface, and a set of XYZ coordinates of the image as projected on the specific surface 2010; generating, based on the construction plan, and the XYZ coordinates recorded by the sensor, an "as built" model representing surfaces and elements as built in the construction site 2020; deriving, from the construction plan, an intended projection portion which includes visual content and dimensional data intended to be projected on the specific surface 2030; calculating XYZ coordinates for the intended projection portion, based on the "as built" model and the XYZ position of the light projector 2040; and projecting the intended projection portion onto the specific surface with the calculated XYZ coordinates for the intended projection portion 2050.

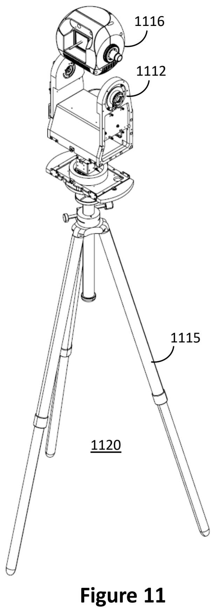

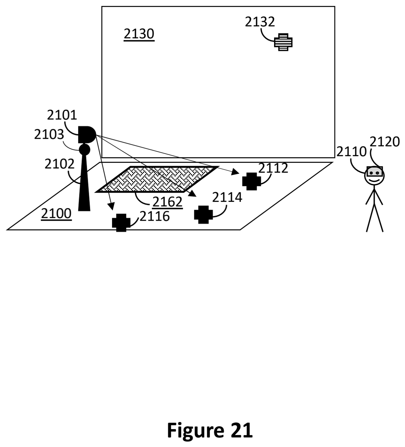

Figure 21 is a high-level diagram illustrating a system for registering P&O of mobile devices relative to a construction site in accordance with some embodiments of the invention. Light projector 2101 (e.g., a laser scanner utilizing galvanometers 910 or a projection system 1120 as shown in Figure 11) may be mounted on a movable platform 2103, which itself may be mounted on a support structure 2102 (e.g., a tripod arrangement) and located in a construction site featuring at least one specific surface, e.g., a projection surface such as surfaces 2100 or 2130. A surface 2100 or 2130 can be a wall or section of a wall, a pillar, a temporary wall or section of a wall at a construction site. A surface 2100 or 2130 can be the floor or a section of a floor or a staircase at a construction site. Light projection device may be any device that can position itself within a construction site, e.g., a scene. Methods for positioning a light projector 2101 or any other position projection device are known in the art, e.g., by including known key points, also referred to herein as reference points, in a scene and other methods. Once a light projector or positioning-projection device 2101 is registered within a scene, a full 6-degrees of freedom (6DOF) may be known for the positioning-projection device 2101. For example, survey tool 20 shown in Figures 1D or 1E may be used as a light projector 2101.

A light projector 2101 may be a laser projector and can emit light different forms of light, such as collimated light or divergent light. Light emitted by light projector 2101 may be in the visible light range, e.g., having a wavelength from about 380 nm to about 750 nm. Alternatively, light emitted by light projector 2101 may be in the infrared light spectrum, e.g., between 750 nm to 1 mm or in the ultraviolet light spectrum having a wavelength between 10 -400 nm. The type of light emitted by the light projector 2101 may be chosen such that it can be detected by at least one sensor of a mobile device, e.g., a head mounted display 2120 worn by a user, e.g., a construction site worker 2110.

At least one sensor, e.g., an image sensor, a direct beam position sensor, a capture device 1390 shown in Figure 13 or a 2D camera 1821A or depth camera 1821B shown in Figure 18, may be configured to record at least one set of XYZ coordinates of at least one specific surface, and a set of XYZ coordinates of the light projector within the construction site.

A computer processor of the system may be configured to derive, from a construction plan, an intended projection portion which includes visual content and dimensional data intended to be projected onto the at least one specific surface that also appears in the construction plan, e.g., construction plan model 1350. For example, operational instructions and commands may be issued to the system by, for example, an operator over wired or wireless communication mediums using one or both of mobile user interface 1831 and/or the cloud 1832 and/or any storage device shown in Figure 18. Computer processor 1830 may be operably connected to a 2D camera 1821A and/or a depth camera 1821B and further to a main controller 1833. Storage devices 1844 and 1845 are connected to the CPU and controller respectively and provide the relevant construction plans and other data and instructions required for the operation of the system. For example, a construction plan may include an intended projection portion such as dimensional data of a door, a window or a sink to be constructed within a wall.

A computer processor of the system may be configured to calculate at least one set of position markers from the intended projection, wherein each position marker includes an XYZ position within the at least one specific surface, wherein the XYZ position is calculated relative to a position of the light projector. For example, depending on the location of light projector 2101 within a construction site, the distance to a specific surface within the construction site may vary. Thus, position markers may be calculated relative to the projection distance of the projector from a specific surface, e.g., surface 2100 or 2130.

A projection of a position marker such as position markers 2112, 2114, 2116 may include the projection of synthetic key features in form of light rays onto a surface. For example, position markers may be projected in form of points, lines or other shapes onto a surface within a construction site.

A computer processor of the system may be configured to provide the at least one set of position markers to the light projector. For example, for a specific location A of projector 2101, XYZ coordinates indicate the location of position marker, e.g., position markers 2112, 2114, 2116, onto a specific surface such as surfaces 2100 or 2130.

A light projector 2101 may be configured to project the XYZ coordinates of the at least one set of position markers, e.g., position markers 2112, 2114, 2116, onto the at least one specific surface onto the at least one specific surface within a construction site. For example, for intended projection B of a position marker onto a specific surface, light projector 2101 may emit a portion of light onto a specific surface that corresponds to the XYZ coordinates of the at least one set of position markers relative to the light projector.

A projection of the XYZ coordinates of the at least one set of position markers, e.g., projections 2112, 2114, 2116, onto the at least one specific surface may be detectable by at least one sensor located at a mobile device. A mobile device may be, for example, a head mounted device (HMD), a phone, or a tablet, etc..

Detection of the emitted light of the light projector 2101 on a surface within the construction site may allow registration of XYZ coordinates of a virtual reality interface of the mobile device relative to the projection of the position markers, e.g., projection markers 2112, 2114, 2116, onto the at least one specific surface. For example, light emitted by the light projector 2101 may be light in the infrared spectrum and mobile device 2120, e.g., a head-mounted device located at user 2110 may include a sensor which is capable to detect light in the infrared spectrum. Thus, the sensor of the mobile device may detect XYZ coordinates of position markers which are projected onto a specific surface, e.g., wall 2130.

In some embodiments, the computer processor is configured to provide the mobile device with a field of view retrieved by the at least one sensor. For example, light projector 2130 may include a camera which can capture a field of view, e.g., of a construction site from the location of the light projector. The camera may be configured to detect light emitted by light projector 2130. By registering the camera located at the light projector with respect to the projection of the position markers, e.g., projection markers 2112, 2114, 2116, onto the at least one specific surface, the camera may provide a field of view of a construction site that is different to the field of view of the mobile device 2120. The camera, e.g., camera 21a or 21b shown in Figure 2A, may be in communication with the mobile device 2120 and may transmit the camera's field of view of the construction site or scene to the mobile device. Mobile device 2120 may be configured to display or overlay an augmented reality or mixed reality view that includes a real-world view, e.g., field of view of the mobile device, in combination with the field of view received from the camera, e.g., camera 21a or 21b.

At least one set of position markers may include a set of at least three position markers. Providing at least three XYZ coordinates for the intended projection may allow registration of the XYZ coordinates of the mobile device's virtual reality interface to the XYZ coordinates of the at least one specific surface within the construction site using triangulation.

Dimensional data may include dimensions and scale of an element and optionally the position and orientation of an element included in a projection plan. For example, dimensional data may include dimensions of an object to be installed within a construction site, e.g., location and dimensions of a sink on a specific surface.

A computer processor may be configured to apply selective modeling of the specific surface by instructing a sensor to record only a portion of the at least one set of XYZ coordinates of at least one specific surface. For example, a sensor in form of a camera 21a or 21b may record at least one set of XYZ coordinates of a specific location within a specific surface. By recording XYZ coordinates of a specific location with a surface of a construction site, a sensor may omit, for example, recording coordinates for part of a surface that is about to be deconstructed.

In some embodiments, the system includes a support structure; a moveable platform connected to the support structure, wherein the moveable platform is configured to rotate at least one two-axis electro-optic deflection unit mounted on the moveable platform; and wherein the at least one sensor is configured to record at least one of: a steering angle of the light beam relative to a part of the survey tool when aimed at a point on one of the surfaces within the construction site; and a distance between the light projector and the point; and wherein the light projector is coupled to the two-axis electro-optic deflection unit configured to project a light beam, wherein steering of the light beam is carried out by operating at least one of: the two-axis electro-optic deflection unit, and the moveable platform, and wherein the light beam forms a projection onto surfaces within the construction site.

At least one sensor may be configured to record at least two steering angles or at least two distances to at least two different points on surfaces within the construction site: Coordinates of the two different points may be known within the construction site and the construction plan, and the at least one computer processor may be configured to determine the set of XYZ coordinates of the light projector within the construction site. The determination of the set of XYZ coordinates may proceed, e.g., using triangulation or trilateration based on additional data and at least one of: the at least two steering angles; and the at least two distances to the at least two different points.

A mobile device for a construction site may include at least one sensor configured to detect a projection of at least one set of position markers within a real world scene at a construction site. A mobile device for a construction site may include a display unit configured to enhance the real world scene with a virtual reality interface. A mobile device for a construction site may include a computer processor configured to register at least one set of XYZ coordinates of the virtual reality interface of the mobile device relative to the detected projection of the at least one set of position markers.

A mobile device for a construction site may include a computer processor configured to provide the registered virtual reality interface to the display unit of the mobile device. For example, a display unit of mobile device 2120 may generate synthetic data such as wall and construction elements 2162 and 2132 within a registered virtual reality interface displayed to a user, e.g., user 2110. A display unit of a mobile device 2120 may display an augmented reality or mixed reality view to a user of the mobile device.

For example, a real world view recorded by mobile device 2120 may be augmented with a registered virtual reality interface. The real world view may include a projection from light projector 2101. The projection may include light that is in the visible light range for a human eye, or may include light that is not visible for a human eye, or may include a combination of light that is visible and invisible to a human eye. For example, light projector 2101 may emit light in the visible light range, e.g., in the form of construction instructions for a construction worker and may emit light in form of projected position markers which are not visible to the human eye.

A mobile device for a construction site may include a computer processor configured to augment the real world scene perceived by a user with virtual objects of the virtual reality interface. Virtual objects 2132 or 2162 may be selected from a group consisting of: construction elements, construction tools, safety instructions and user manuals for construction tools.

A mobile device may be a head mounted device (HMD). A mobile device may register at least one set of XYZ coordinates of the virtual reality interface of the mobile device relative to the detected projection of the at least one set of position markers by detecting position markers, e.g., position markers 2112, 2114, 2116, within the field of view of the mobile device. Registration of the mobile device based on the detected position markers may include a triangulation or trilateration process to calculate the exact laser system location within a specific surface located in a construction site.

A light projector 2101 may be registered within a location of a construction site by making steering angle and/or distance measurements to reference points within a surface, e.g., surface 2100) and therefrom estimating the position and the orientation of the system. This may be achieved by moving the light scanner mirrors and/or moveable platform until a laser point is positioned on the first reference point; reading the steering angle and/or distance of the first reference point relative to any specified part of the survey tool such as support structure 2102; repeating the process for all reference points; and using a triangulation or trilateration algorithm to estimate the position and orientation of the system within the build space. The movement of the light scanner mirrors and/or moveable platform may be controlled manually by an operator using a control device such as, for example, a joystick, or automatically by using a camera in addition with computer vision algorithms to move the laser point towards each reference point. It will be appreciated that any other automated method or algorithm known by those skilled in the art may also be utilized.

Light projector 2101 may project content in a conformal and registered manner onto one or more projection surfaces 2100. In circumstances where several projection tiles may be required, for instance where content is to be projected upon surface 2100, the moveable platform and/or light scanner mirrors may be operated to direct laser projector 2101 onto the required surface without any loss of registration or alignment. This may be done either manually by an operator or automatically through use of suitable computer algorithms using sensor readings obtained from, for example, pan/tilt encoders.

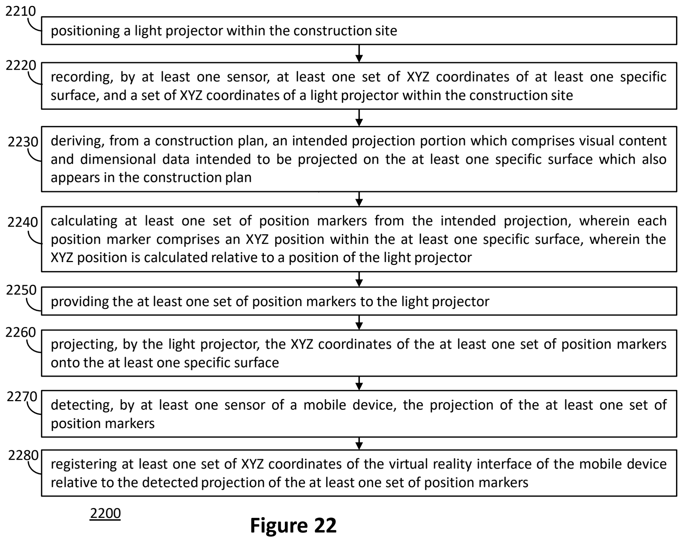

Figure 22 is a high-level flowchart diagram illustrating a method 2200 in accordance with embodiments of the present invention. Method 2200 of projecting a portion of a construction plan within a construction site may include the following steps: positioning a light projector within the construction site 2210; recording, by at least one sensor, at least one set of XYZ coordinates of at least one specific surface, and a set of XYZ coordinates of a light projector within the construction site 2220; deriving, from a construction plan, at least one set of position markers which includes visual content and dimensional data intended to be projected on the at least one specific surface which also appears in the construction plan 2230; calculating XYZ coordinates for the intended projection of the at least one set of position markers, based on the construction plan and the XYZ position of the light projector relative to the at least one set of XYZ coordinates of the at least one specific surface 2240; providing the XYZ coordinates for the intended projection of the at least one set of position markers to the light projector 2250; projecting, by the light projector, the at least one set of position markers onto the at least one specific surface 2260; detecting, by at least one sensor of a mobile device, the projection of the at least one set of position markers 2270; and registering XYZ coordinates of a virtual reality interface of the mobile device relative to the XYZ coordinates of the at least one specific surface within the construction site 2280.

For example, a light projector 2101 may derive at least one set of XYZ coordinates of specific surfaces of a construction site by projecting laser patterns onto one or more surfaces within the construction site and recording the projected pattern with a 2D camera, and therefrom deriving at least one set of XYZ coordinates for the intended projection of the at least one set of position markers by calculating a 3D model based on the recorded pattern.

Method 2200 may include providing, by the computer processor, a registered virtual reality interface to a display unit of a mobile device. A virtual reality interface may be an interface that is used to include virtual objects (e.g., objects 2132, 2162) to the field of view of a user, such as a construction worker such as a wall, a window or a sink.

Method 2200 may include providing, by the computer processor, a mobile device with a field of view of retrieved by the at least one sensor of a light projector. For example, dimensional data may include dimensions and scale of the projected element and optionally the position and orientation of the projected element.

Method 2200 may include applying selective modeling of the specific surface by instructing the sensor to scan only a portion of the at least one specific surface.

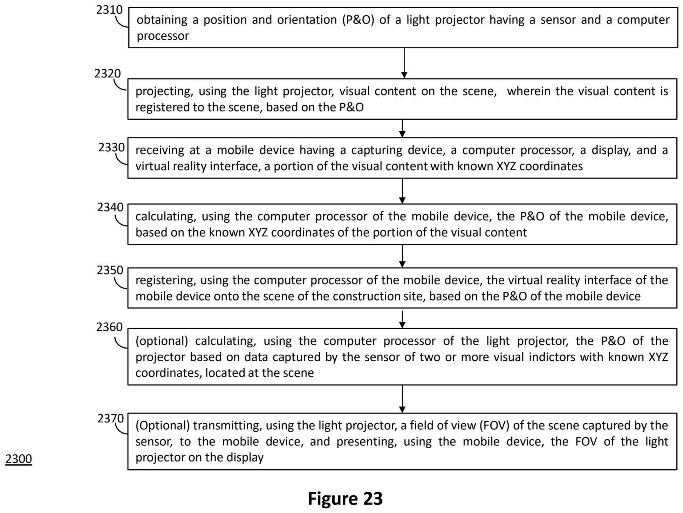

Figure 23 is a high-level flowchart diagram illustrating a method in accordance with some embodiments of the present invention. Method 2300 of registering a virtual reality interface of a mobile device onto a scene of a construction site, may include the following steps: obtaining a position and orientation (P&O) of a light projector having a sensor and a computer processor 2310; projecting, using the light projector, visual content on the scene, wherein the visual content is registered to the scene, based on the P&O 2320; receiving at a mobile device having a capturing device, a computer processor, a display, and a virtual reality interface, a portion of the visual content with known XYZ coordinates 2330; calculating, using the computer processor of the mobile device, the P&O of the mobile device, based on the known XYZ coordinates of the portion of the visual content 2340; and registering, using the computer processor of the mobile device, the virtual reality interface of the mobile device onto the scene of the construction site, based on the P&O of the mobile device 2350.

Method 2300 may further include the step of calculating, using the computer processor of the light projector, the P&O of the projector based on data captured by the sensor of two or more visual indictors with known XYZ coordinates, located at the scene 2360.

Method 2300 may further include the step of transmitting, using the light projector, a field of view (FOV) of the scene captured by the sensor, to the mobile device, and presenting, using the mobile device, the FOV of the light projector on the display 2370.

The aforementioned flowchart and diagrams illustrate the architecture, functionality, and operation of possible implementations of systems, methods and computer program products according to various embodiments of the present invention. In this regard, each portion in the flowchart or portion diagrams may represent a module, segment, or portion of code, which comprises one or more executable instructions for implementing the specified logical function(s). It should also be noted that, in some alternative implementations, the functions noted in the portion may occur out of the order noted in the figures. For example, two portions shown in succession may, in fact, be executed substantially concurrently, or the portions may sometimes be executed in the reverse order, depending upon the functionality involved, It will also be noted that each portion of the portion diagrams and/or flowchart illustration, and combinations of portions in the portion diagrams and/or flowchart illustration, can be implemented by special purpose hardware-based systems that perform the specified functions or acts, or combinations of special purpose hardware and computer instructions.

As will be appreciated by one skilled in the art, aspects of the present invention may be embodied as a system or an apparatus. Accordingly, aspects of the present invention may take the form of an entirely hardware embodiment or an embodiment combining software and hardware aspects that may all generally be referred to herein as a "circuit," "module" or "system".

The aforementioned figures illustrate the architecture, functionality, and operation of possible implementations of systems and apparatus according to various embodiments of the present invention. Where referred to in the above description, an embodiment is an example or implementation of the invention. The various appearances of "one embodiment," "an embodiment" or "some embodiments" do not necessarily all refer to the same embodiments.

Although various features of the invention may be described in the context of a single embodiment, the features may also be provided separately or in any suitable combination. Conversely, although the invention may be described herein in the context of separate embodiments for clarity, the invention may also be implemented in a single embodiment.

Reference in the specification to "some embodiments", "an embodiment", "one embodiment" or "other embodiments" means that a particular feature, structure, or characteristic described in connection with the embodiments is included in at least some embodiments, but not necessarily all embodiments, of the inventions. It will further be recognized that the aspects of the invention described hereinabove may be combined or otherwise coexist in embodiments of the invention.

It is to be understood that the phraseology and terminology employed herein is not to be construed as limiting and are for descriptive purpose only.

The principles and uses of the teachings of the present invention may be better understood with reference to the accompanying description, figures and examples.

It is to be understood that the details set forth herein do not construe a limitation to an application of the invention.

Furthermore, it is to be understood that the invention can be carried out or practiced in various ways and that the invention can be implemented in embodiments other than the ones outlined in the description above.

It is to be understood that the terms "including", "comprising", "consisting" and grammatical variants thereof do not preclude the addition of one or more components, features, steps, or integers or groups thereof and that the terms are to be construed as specifying components, features, steps or integers.

If the specification or claims refer to "an additional" element, that does not preclude there being more than one of the additional element.

It is to be understood that where the claims or specification refer to "a" or "an" element, such reference is not to be construed that there is only one of that element.

It is to be understood that where the specification states that a component, feature, structure, or characteristic "may", "might", "can" or "could" be included, that particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

Methods of the present invention may be implemented by performing or completing manually, automatically, or a combination thereof, selected steps or tasks.

The term "method" may refer to manners, means, techniques and procedures for accomplishing a given task including, but not limited to, those manners, means, techniques and procedures either known to, or readily developed from known manners, means, techniques and procedures by practitioners of the art to which the invention belongs.

The descriptions, examples and materials presented in the claims and the specification are not to be construed as limiting but rather as illustrative only.

Meanings of technical and scientific terms used herein are to be commonly understood as by one of ordinary skill in the art to which the invention belongs, unless otherwise defined.

The present invention may be implemented in the testing or practice with materials equivalent or similar to those described herein.

While the invention has been described with respect to a limited number of embodiments, these should not be construed as limitations on the scope of the invention, but rather as exemplifications of some of the preferred embodiments. Other or equivalent variations, modifications, and applications are also within the scope of the invention. Accordingly, the scope of the invention should not be limited by what has thus far been described, but by the appended claims and their legal equivalents.

## Claims

1. A system for registering a virtual reality interface of a mobile device onto a scene of a construction site, said system comprising:
a light projector having a sensor and a computer processor, said light projector arranged to obtain a position and orientation (P&O) thereof, wherein the light projector is arranged to project visual content on the scene, wherein the visual content is registered to the scene, based on the P&O; and
a mobile device having a capturing device, a computer processor, a display, and a virtual reality interface, wherein the computer processor of the mobile device is arranged to receive from the capturing device a portion of the visual content with known XYZ coordinates, and calculate the P&O of the mobile device, based on the known XYZ coordinates of the portion of the visual content,
wherein the computer processor of the mobile device is further arranged to register the virtual reality interface of the mobile device onto the scene of the construction site, based on the P&O of the mobile device.

2. The system of claim 1, wherein the computer processor of the light projector is arranged to calculate the P&O of the projector based on data captured by the sensor of two or more visual indictors with known XYZ coordinates, located at the scene.

3. The system of claim 1, wherein the computer processor of the light projector is arranged to receive the P&O of the projector from an external source.

4. The system of claim 1, wherein the portion of the visual content with known XYZ coordinates comprises a set of position markers.

5. The system of claim 1, wherein the set of position markers comprises a set of three position markers wherein the computer processor of the mobile device carries out registration of the XYZ coordinates of the virtual reality interface of the mobile device to the XYZ coordinates of the position markers using triangulation.

6. The system of claim 1, wherein the virtual reality interface of the mobile device is arranged to present synthetic data in addition to the scene of the construction site and the visual content, over the display of the mobile device.

7. The system of claim 1, wherein the light projector is arranged to transmit a field of view (FOV) of the scene captured by the sensor, to the mobile device, wherein the mobile device is arranged to present the FOV of the light projector on the display.

8. The system of claim 1, wherein the wherein the mobile device is a head mounted device (HMD).

9. The system of claim 1, wherein the wherein the mobile device is a smartphone.

10. A mobile device capable of registering a virtual reality interface thereof, onto a scene of a construction site, said mobile device comprising:
a capturing device;
a computer processor;
a display; and
a virtual reality interface,
wherein the computer processor of the mobile device is arranged to receive from the capturing device, a portion of a visual content with known XYZ coordinates, wherein the visual content has been projected by a light projector having a sensor and a computer processor, said light projector arranged to obtain a position and orientation (P&O) thereof, wherein the light projector is arranged to project visual content on the scene, wherein the visual content is registered to the scene, based on the P&O,
wherein the computer processor of the mobile device is further arranged to calculate the P&O of the mobile device, based on the known XYZ coordinates of the portion of the visual content, and
wherein the computer processor of the mobile device is further arranged to register the virtual reality interface of the mobile device onto the scene of the construction site, based on the P&O of the mobile device.

11. The mobile device of claim 10, wherein the portion of the visual content with known XYZ coordinates comprises a set of position markers.

12. The mobile device of claim 10, wherein the set of position markers comprises a set of three position markers wherein the computer processor of the mobile device carries out registration of the XYZ coordinates of the virtual reality interface of the mobile device to the XYZ coordinates of the position markers using triangulation.

13. The mobile device of claim 10, wherein the virtual reality interface of the mobile device is arranged to present synthetic data in addition to the scene of the construction site and the visual content, over the display of the mobile device.

14. The mobile device of claim 10, wherein the mobile device is arranged to receive a field of view (FOV) of the scene captured by the sensor of the light projector, wherein the mobile device is arranged to present the FOV of the light projector on the display.

15. A method of registering a virtual reality interface of a mobile device onto a scene of a construction site, said method comprising:
obtaining a position and orientation (P&O) of a light projector having a sensor and a computer processor,
projecting, using the light projector, visual content on the scene, wherein the visual content is registered to the scene, based on the P&O;
receiving at a mobile device having a capturing device, a computer processor, a display, and a virtual reality interface, a portion of the visual content with known XYZ coordinates;
calculating, using the computer processor of the mobile device, the P&O of the mobile device, based on the known XYZ coordinates of the portion of the visual content; and
registering, using the computer processor of the mobile device, the virtual reality interface of the mobile device onto the scene of the construction site, based on the P&O of the mobile device.
